# EUROPEAN PATENT SPECIFICATION

(11) **EP 0 739 324 B1**
(45) Date of publication and mention of the grant of the patent: **24.03.1999**
(21) Application number: 95933600.9
(22) Date of filing: 26.10.1995
(51) Int. Cl.: C04B 35/26, H01F 1/10

(54) **MOULDING OF SINTERED HEXAGONAL FERRITE MATERIAL**
SINTERFORMKÖRPER AUS HEXAGONALEM FERRIT
PIECE MOULEE EN MATIERE DE FERRITE HEXAGONALE FRITTEE

(30) Priority: 15.11.1994 EP 94203319
(43) Date of publication of application: 30.10.1996
(73) Proprietor: Koninklijke Philips Electronics N.V., 5621 BA Eindhoven (NL)
(72) Inventor: VAN DER ZAAG, Pieter, Jan, NL-5621 BA Eindhoven (NL); VAN DER VALK, Pieter, Johan, E-19200 Azuqueca de Henares (ES)
(74) Representative: van der Veer, Johannis Leendert
(86) International application number: IB9500926
(87) International publication number: WO9615078

(56) References cited:
- FR-A- 2 034 119
- US-A- 2 977 312
- US-A- 3 895 092

## Description

The invention relates to a moulding of a sintered hexagonal ferrite material. The invention also relates to a magnetic antenna manufactured from this material.

Mouldings of a sintered hexagonal ferrite material are known per se. They are described, inter alia, in US 2,977,312. This type of materials is generally referred to as "ferroxplana materials", which are described in greater detail in "Philips Technical Reviews", 18 (1956/1957), pp. 145-154.

The known sintered mouldings have the important disadvantage that the losses are relatively high. Said relatively high losses stand in the way of a general application of these materials. See Adv. Ceram. 16 (1986), pp. 1-4.

It is an object of the invention to obviate the above-mentioned disadvantage. The invention more particularly aims at providing a moulding of a sintered hexagonal ferrite material whose losses, particularly the loss factor tan δ, are much smaller than the corresponding losses of the known mouldings. These small losses should occur in particular when the ferrite materials in accordance with the invention are used at very high frequencies of 100 MHz or more.

These and other objects are achieved by means of a moulding of a hexagonal ferrite material, characterized in that the majority of the grains of the material have a monodomain structure.

In series of experiments which have led to the present invention, it has been established by Applicants that the magnetic structure of the grains is very important for the loss properties of the relevant ferroxplana materials. For example, experiments have shown that sintered hexagonal ferrite materials comprising grains which have only one magnetic domain exhibit a surprisingly low loss factor tan δ. This applies in particular when these mouldings are used at frequencies of 100 MHz or more. Under these conditions, the loss factor tan δ can be reduced by a factor of 2 or more. It is noted that the expression "the majority of the grains" is to be understood to mean herein "at least 40% of the grains". It is further noted that grains having a monodomain structure comprise only one magnetic domain.

A preferred embodiment of the moulding in accordance with the invention is characterized in that the average grain size of the material is smaller than 2.8 micrometers. The average grain size preferably ranges between 1.4 and 2.5 micrometers.

Applicants have observed that at an average grain size of approximately 2.8 micrometers, approximately 90% of the grains have a monodomain structure. A smaller average grain size leads to an increase of this percentage. Percentages of 98% and more are obtained if the average grain size of the hexagonal ferrite material ranges from 1.4 to 2.5 micrometers. The smallest loss factor is observed in mouldings of sintered hexagonal ferrite material having this average grain size. It has been found that the manufacture of average grain sizes below 1.4 micrometers is relatively laborious and hence expensive. In addition, these small grain sizes do not lead to a further reduction of the loss factor because the favourable monodomain structure has already been reached. It is noted that the grains of the hexagonal material are plate-shaped. For this reason, the grain size is determined in the plane of the grains. The size of the grains is defined in accordance with the so-called "mean linear intercept" method.

The invention can in principle be applied to all types of hexagonal ferrite materials such as the so-called W, M and Y ferrites. However, in accordance with a preferred embodiment of the invention, the composition of the material corresponds to the formula Ba₃Me₂Fe₂₄O₄₁, wherein Me stands for one or more divalent ions selected from the group formed by Co, Fe, Mn, Ni, Zn, Mg and (Li.Fe)_{1/2}. It has been found that this type of hexagonal ferrite material, also referred to as Z ferrite, can very advantageously be used at extremely high frequencies of 200 MHz and more. By virtue of the monodomain structure of the grains, this material has a very low loss factor under these conditions.

It is noted that maximally one third of the Ba of the W ferrite can be replaced by Sr, Pb and/or Ca. Z ferrites in which maximally one third of the Ba can be replaced by Sr, Pb and/or Ca also fall within the scope of the present embodiment. It is further noted that Me is preferably composed of at least 80 at. % Co. The most preferred material is the so-called Co₂Z ferrite, wherein Me is completely composed of Co. The sintered Z ferrite material in accordance with the invention may further be doped with small quantities of other elements, in particular sintering agents such as B₂O₃.

The invention also relates to a magnetic antenna. This antenna is manufactured in accordance with the invention from a sintered hexagonal ferrite material as described hereinabove. Such antennas can very advantageously be used in personal communication systems such as mobile telephones and so-called pagers.

These and other aspects of the invention will be apparent from and elucidated with reference to the embodiments described hereinafter.

A number of mouldings having the chemical composition Ba₂Co₂Fe₂₄O₄₁ and having different average grain sizes were manufactured as follows. For the starting materials use was made of barium carbonate (BaCO₃), cobalt carbonate (CoCO₃) and iron oxide (Fe₂O₃). To obtain the above-mentioned composition, a mixture of 62.7 g BaCO₃, 197.5 g Fe₂O₃ and 25.1 g CoCO₃ were ground in ethyl alcohol for approximately 6 hours. After filtration of the mixed powder, it was dried. Subsequently, the powder thus formed was prefired at 950 °C for 4 hours.

To obtain sintered mouldings having different grain sizes, the fired product thus produced was subdivided into ten fractions, each of which was ground in a different manner in a liquid. All fractions were first ground with steel balls having a diameter of 13-16 mm for 6 to 12 hours. Five fractions were subsequently subjected to a further grinding operation with steel balls having a diameter of 3 mm for 3-9 hours. After filtering-off and drying, the average grain size of each of the fractions was determined by means of a Fisher measurement.

After mixing said fractions with a binder (2% ammonium algimate in demineralised water) the mixture obtained was passed through a sieve and subsequently granulated. Next, each of the granulated fractions was pressed (600 kg/cm²) to form square blocks. These blocks were sintered for approximately 1-4 hours at a temperature ranging between 1120 and 1400 °C. Dependent upon the sinter duration, sinter temperature and the fineness of the grind, the blocks of sintered Co₂Z-ferrite material had an average grain size ranging between 1.0 and 6.0 micrometers. The combination of shorter sinter times, lower sinter temperatures and longer grinding times results in sintered mouldings having a relatively small grain size.

The average grain size was determined by means of the "mean linear intercept" method on the basis of scanning electron microscopy (SEM) and microstructure photographs. The average size of the magnetic domains was determined by means of neutron-polarization measurements.

The sintered blocks were subjected to a number of magnetic measurements to determine, inter alia, the loss factor at a frequency of 260 MHz at room temperature. The results are listed in the Table. The Table shows that the mouldings having an average grain size of 2.8 micrometers or less exhibit a much smaller loss factor than mouldings having a larger average grain size. Mouldings having an average grain size d (micrometers) in the range from 1.4 to 2.5 micrometers were found to have the smallest loss factor.

**Table**

| d | tan δ |
|---|---|
| 1.36 | 0.005 |
| 1.78 | 0.004 |
| 2.31 | 0.0035 |
| 2.52 | 0.005 |
| 2.78 | 0.01 |
| 3.29 | 0.021 |
| 4.31 | 0.025 |
| 5.54 | 0.022 |

In summary, it is noted that mouldings of sintered hexagonal ferrite material, the majority of the grains of which have a monodomain structure, have a considerably smaller loss factor than corresponding ferrite materials of which at least a substantial part of the grains comprise two or more magnetic domains. By virtue thereof, the hexagonal ferrite materials are extremely suitable for use as an antenna material in personal communication equipment such as mobile telephones etc.

## Claims

1. A moulding of a sintered hexagonal ferrite material, characterized in that at least 90% of the grains of the sintered material have a monodomain structure.

2. A moulding as claimed in Claim 1, characterized in that the average grain size of the material is smaller than 2.8 micrometers.

3. A moulding as claimed in Claim 2, characterized in that the average grain size ranges between 1.4 micrometers and 2.5 micrometers.

4. A moulding as claimed in Claim 1, 2 or 3, characterized in that the composition of the material corresponds to the formula Ba₃Me₂Fe₂₄O₄₁, wherein Me stands for one or more divalent ions selected from the group formed by Co, Fe, Mn, Ni, Zn, Mg and (Li.Fe)_{1/2}.

5. A moulding as claimed in Claim 4, characterized in that Me is composed of divalent Co.

6. A magnetic antenna which is manufactured from a sintered hexagonal ferrite material as claimed in any one of the preceding Claims.

## Patentansprüche

1. Formkörper aus einem gesinterten hexagonalen Ferritmaterial, dadurch gekennzeichnet, daß wenigstens 90% der Körner des gesinterten Materials eine Monodomänenstruktur haben.

2. Formkörper nach Anspruch 1, dadurch gekennzeichnet, daß die mittlere Korngröße des Materials kleiner ist als 2,8 µm.

3. Formkörper nach Anspruch 2, dadurch gekennzeichnet, daß die mittlere Korngröße zwischen 1,4 µm und 2,5 µm liegt.

4. Formkörper nach Anspruch 1, 2 oder 3, dadurch gekennzeichnet, daß die Zusammensetzung des Materials der Formel Ba₃Me₂Fe₂₄O₄₁ entspricht, wobei Me für ein oder mehrere zweiwertige Ionen steht, selektiert aus der Gruppe, die durch Co, Fe, Mn, Ni, Zn, Mg und (Li.Fe)_{1/2} gebildet wird.

5. Formkörper nach Anspruch 4, dadurch gekennzeichnet, daß Me aus zweiwertigem Co besteht.

6. Magnetische Antenne, hergestellt aus einem gesinterten hexagonalen Ferritmaterial nach einem der vorstehenden Ansprüche.

## Revendications

1. Pièce moulée réalisée en une matière de ferrite hexagonale frittée, caractérisée en ce qu'au moins 90 % des grains de la matière frittée présente une structure à monodomaines.

2. Pièce moulée selon la revendication 1, caractérisée en ce que la grosseur moyenne des grains de la matière est inférieure à 2,8 micromètres.

3. Pièce moulée selon la revendication 2, caractérisée en ce que la grosseur moyenne des grains se situe entre 1,4 micromètre et 2,5 micromètres.

4. Pièce moulée selon la revendication 1, 2 ou 3, caractérisée en ce que la composition de la matière correspond à la formule Ba₃Me₂Fe₂₄O₄₁, dans lequel Me représente un ou un plus grand nombre d'ion(s) bivalent(s) choisi(s) dans le groupe formé par Co, Fe, Mn, Ni, Zn, Mg et (Li,Fe)_{1/2}.

5. Pièce moulée selon la revendication 4, caractérisée en ce que Me est constitué par du Co bivalent.

6. Antenne magnétique qui est réalisée à partir de la matière de ferrite hexagonale frittée comme revendiquée par l'une des revendications précédentes.
